# EUROPÄISCHE PATENTANMELDUNG

(11) **EP 1 233 601 A2**
(43) Veröffentlichungstag der Anmeldung: **21.08.2002**
(21) Anmeldenummer: 01130140.5
(22) Anmeldetag: 19.12.2001
(51) Int. Cl.: H04M 3/493

(54) **Sprache-über-IP-Zugang zu Sprachantwortsystemen**

(30) Priorität: 15.02.2001 DE 10108869
(71) Anmelder: Deutsche Telekom AG, 53113 Bonn (DE)
(72) Erfinder: Runge, Fred, 15838 Wünsdorf (DE); Müller, Christel, 15732 Schulzendorf (DE); Seils, Ralf, 16356 Birkholzaue (DE)

(57) **Zusammenfassung**

Es wird ein System zum Herstellen einer Verbindung zwischen einem von mehreren Informationen übertragenden Anbietern (Dienste 7.1 bis 7.n) und einem die übertragenen Informationen nutzenden Endgerät (1, 2, 3) durch vom Endgerät bewirkten Zugriff zu dem Anbieter über ein Netzwerk (Internet 4 und/oder Telefonnetz 5) und ein an das Netzwerk angeschlossenes Portal (Web-Portal 8.1, WAP-Portal 8.2 und Sprachportal 8.3), wobei die von den einzelnen Anbietern übertragenen Informationen in unterschiedlicher Form dargestellt sind, beschrieben. Hierbei ist jeder der mehreren Anbieter mit mindestens zwei für unterschiedliche Informationsformen bestimmten Portale verbunden, die die vom Anbieter übertragenen Informationen in durch mindestens zwei unterschiedliche Endgeräte nutzbare Informationen umwandeln. Dies ermöglicht eine multimodale bzw. multimediale Interaktion zwischen einem Nutzer bzw. Endgerät und einem bestimmten der unterschiedlich angebotenen Dienste. Ein Nutzer hat somit die Möglichkeit, ein beliebiges von mehreren Zugriffsmedien auszuwählen, um zu den Informationen eines bestimmten Anbieters zu gelangen. Weiterhin hat er die Möglichkeit, einen von mehreren Übertragungswegen für die von dem Anbieter bereitgestellten Informationen auszuwählen.

## Beschreibung

Die Erfindung betrifft ein System nach dem Oberbegriff des Anspruchs 1. Der Zugriff zu von Anbietern (Diensten) bereitgehaltenen Informationen erfolgt in der Regel über sogenannte Portale, welche die Suche nach sich mit einer bestimmten Thematik befassenden Informationen erleichtern. Hierbei sind im wesentlichen die folgenden Portalsysteme bekannt:

### 1. Web-Portale

Diese verwenden paketorientierte Codierungen wie HTML, XML und dergleichen. Sie ermöglichen den Zugriff auf eine Vielzahl von ausschließlich Web-Adressen (IP-Internet) zu einer bestimmten Thematik per Mausklick.

### 2. WAP(Wireless Application Protocol)-Portale

Diese ermöglichen den Zugriff auf eine Vielzahl von sogenannten WAP-Diensten (IP-Internet), welche Informationen zu einer bestimmten Thematik anbieten. Die Auswahl erfolgt durch Betätigung der Tasten eines mit einem Display ausgestatteten Mobiltelefons.

### 3. Sprachportale

Diese ermöglichen den Zugriff auf eine Vielzahl von Informationen von ausschließlich über Telefon anbietenden Sprachdiensten, wobei die Auswahl eines derartigen Sprachdienstes über die Sprache (Spracherkennung oder Tonwahl) oder Tonwahl (MFC) erfolgen kann.

Der Nachteil dieser bekannten Portalsysteme besteht darin, daß für die einzelnen Anbieter bestimmte Zugriffswege bestehen und ein Nutzer eines bestimmten Dienstanbieters auf die Verwendung des zugehörigen Zugriffsweges angewiesen ist. Es stehen ihm damit für den Zugriff auf einen bestimmten Anbieter nur ein oder maximal zwei (Sprache oder MFC bei Sprachportalen) Kommunikationsmedien zur Verfügung. Damit ist auch eine Begrenzung der möglichen Interaktionsmodi gegeben.

Es ist daher die Aufgabe der vorliegende Erfindung, ein System zum Herstellen einer Verbindung zwischen einem von mehreren Informationen übertragenden Anbietern und einem die übertragenen Informationen nutzenden Endgerät durch vom Endgerät bewirkten Zugriff zum Anbieter über ein Netzwerk und ein an das Netzwerk angeschlossenes Portal, wobei die von den einzelnen Anbietern übertragenen Informationen in unterschiedlicher Form dargestellt sind, zu schaffen, welche multimediale Zugriffsmöglichkeiten auf die Anbieter von Web-, WAP-, Sprach- und ggf. weitere Dienste bieten.

Diese Aufgabe wird erfindungsgemäß gelöst durch ein System mit den Merkmalen des Anspruchs 1. Vorteilhafte Weiterbildungen der erfindungsgemäßen Vorrichtung ergeben sich aus den Unteransprüchen.

Dadurch, daß jeder der mehreren Anbieter mit mindestens zwei für unterschiedliche Informationsformen bestimmten Portalen verbunden ist, die die vom Anbieter übertragenen Informationen in durch mindestens zwei unterschiedliche Endgeräte nutzbare Informationen umwandeln, wird eine multimodale bzw. multimediale Interaktion mit einem bestimmten der unterschiedlich angebotenen Dienste möglich. Ein Nutzer hat somit die Möglichkeit einen beliebigen Zugriffsweg auszuwählen, um zu den Informationen eines bestimmten Anbieters zu gelangen. Von besonderer Bedeutung ist dies für die Beziehung zwischen sprachorientiert kodierten Informationen, die über Sprachportale übertragen werden, und paketorientiert kodierten Informationen, die über Web- und WAP-Portale übertragen werden.

Gemäß einer bevorzugten Ausbildung des Systems wird für ein Sprachportal, das bereits über das Telefonnetz von verschiedenen Nutzern verwendet wird, ein VoIP(Voice over IP)-Zugang geschaffen. Der Nutzer hat damit auch einen direkten Zugriff über die IP-Telefone auf einen Sprachdienst-Anbieter. Parallel zum Sprachportal bzw. in das Sprachportal integriert sind zweckmäßig für die einzelnen angebotenen Sprachdienste Web- und WAP-Portale geschaffen, die die übertragenen Informationen der Sprachdienste in paketorientierter Kodierung wiedergeben. Damit stehen dem Nutzer die Leistungen der einzelnen Sprachdienste sowohl sprachorientiert kodiert als auch paketorientiert kodiert zur Verfügung.

Bei dem multimedialem Zugang (z.B. über Web und IP-Telefon, über WAP und Telefon und dgl.) werden die unterschiedlich dargestellten Informationen eines Anbieters, die dem Nutzer an seinem Endgerät zur Verfügung stehen, vorteilhaft über die verschiedenen Medien miteinander synchronisiert. Damit kann der Nutzer auch während einer laufenden Interaktion mit einem Anbieter zu einem ihm mehr zusagenden Medium wechseln bzw. über ein Gateway den ihm mehr zusagenden Verbindungsweg wählen.

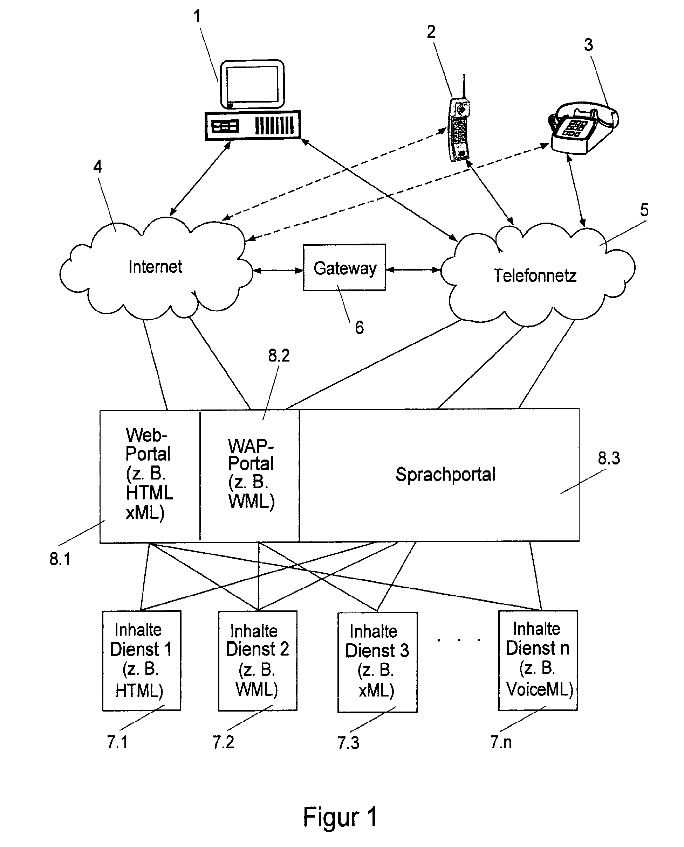

Die Erfindung wird im folgenden anhand eines in der Figur dargestellten Ausführungsbeispiels näher erläutert. Diese zeigt in schematischer Wiedergabe ein System zum Herstellen einer Verbindung zwischen einem Endgerät und einem Informationsanbieter über einen beliebigen Zugriffs- und Informationsübertragungsweg.

Als Endgeräte sind in der Figur ein PC 1, ein Mobiltelefon 2 und ein leitungsgebundenes Telefon 3 dargestellt. Der PC 1 ist direkt mit dem Internet 4 und, da er mit einer Telefon-Schnittstellenkarte ausgestattet ist, auch direkt mit einem Telefonnetz 5 verbindbar. Das Mobiltelefon 2 und das Telefon 3 sind direkt mit dem Telefonnetz 5 verbindbar. Das Internet 4 und das Telefonnetz 5 sind über ein Gateway 6 miteinander verbunden, so daß auch eine Verbindung zwischen dem Mobiltelefon 2 und dem Telefon 3 einerseits und dem Internet 4 andererseits herstellbar ist, wie durch die gestrichelten Linien angedeutet ist. Eine Vielzahl von Anbietern 7.1 bis 7.f stellt Informationen mit jeweils auf bestimmte Themen bezogenen Inhalten zur Verfügung, die von den Endgeräten nach Herstellung einer entsprechenden Verbindung abgerufen werden können. Die Verbindung wird jeweils durch ein Portal hergestellt, das zwischen dem Internet 4 und/oder dem Telefonnetz 5 einerseits und einem Teil der oder allen Anbietern 7.1 bis 7.n geschaltet ist. In der Figur sind ein Web-Portal 8.1, ein WAP-Portal 8.2 und ein Sprachportal 8.3 dargestellt.

Die von den Anbietern 7.1 bis 7.n bereitgestellten Informationen können in unterschiedlicher Form repräsentiert werden, beispielsweise durch verschiedene Skriptsprachen HTML, WML, Voice ML, xML und andere durch die Portale interpretierbaren Darstellungsmöglichkeiten. Diese werden gegebenenfalls durch die Portale in endgerätekonforme Kodierungen umgesetzt.

Da die einzelnen Anbieter 7.1 bis 7.n jeweils mit mehreren der Portale 8.1 bis 8.3 verbunden sind, sind die von einem Anbieter bereitgestellten Informationen auch über mehrere Portale abrufbar. Ein Nutzer kann daher auswählen, über welches Endgerät er mit einem bestimmten Anbieter in Verbindung treten möchte. Durch das Gateway 6 ist es möglich, eine Verbindung zwischen dem Mobiltelefon 2 oder dem Telefon 3 und einem Anbieter auch über das Internet 4 herzustellen.

So kann beispielsweise ein Nutzer, dem der PC 1, das Mobiltelefon 2 und das Telefon 3 zur Verfügung stehen, ein beliebiges dieser drei Endgeräte auswählen, um sich einen Zugang zum Anbieter 7.n zu verschaffen und die von diesem angebotenen Informationen zu empfangen, wobei er zusätzlich auch den Übertragungsweg bestimmen kann (z.B. über das Web-Portal 8.1 oder das Sprachportal 8.3). So kann der Übertragungsweg zwischen Mobiltelefon 2 und Anbieter 7.n wie folgt verlaufen:
Anbieter 7.n, Web-Portal 8.1, Internet 4, Gateway 6, Telefonnetz 5, Mobiltelefon 2 oder Anbieter 7.n, Sprachportal 8.3, Telefonnetz 5, Mobiltelefon 2. Dabei ist die Informationsübertragung über diese beiden Wege so synchronisiert, daß der Nutzer während einer laufenden Übertragung ohne Informationsverlust den Übertragungsweg wechseln kann.

## Patentansprüche

1. System zum Herstellen einer Verbindung zwischen einem von mehreren Informationen übertragenden Anbietern (7.1 bis 7.n) und einem die übertragenen Informationen nutzenden Endgerät (1, 2, 3) durch vom Endgerät (1, 2, 3) bewirkten Zugriff zum Anbieter (7.1 bis 7.n) über ein Netzwerk (4, 5) und ein an das Netzwerk (4, 5) angeschlossenes Portal (8.1 bis 8.3), wobei die von den einzelnen Anbietern (7.1 bis 7.n) übertragenen Informationen in unterschiedlicher Form repräsentiert sind, **dadurch gekennzeichnet, daß** jeder der mehreren Anbieter (7.1 bis 7.n) mit mindestens zwei für unterschiedliche Informationsformen bestimmten Portalen (8.1 bis 8.3) verbunden ist, die die vom Anbieter (7.1 bis 7.n) übertragenden Informationen in durch mindestens zwei unterschiedliche Endgeräte (1, 2, 3) nutzbare Informationen umwandeln.

2. System nach Anspruch 1, **dadurch gekennzeichnet, daß** eines der Portale (8.1 bis 8.3) ein Sprachportal (8.3) ist, das zwischen einem Telefonnetz und mehreren Informationen in unterschiedlicher Form übertragenden Anbietern (7.1 bis 7.n) angeordnet ist und einen VoIP(Voice over IP)-Zugang aufweist für eine Verbindung zwischen einem IP-Telefonempfänger und einem Informationen in Form von Sprache übertragenden Anbieter (7.n).

3. System nach Anspruch 1 oder 2, **dadurch gekennzeichnet, daß** eines der Portale (8.1 bis 8.3) ein Web-Portal (8.1) ist, das zwischen dem Internet (4) und mehreren Informationen in unterschiedlicher Form übertragenden Anbietern (7.1, 7.2, 7.n) angeordnet ist zur Verbindung eines an das Internet (4) angeschlossenen Endgerätes (1, 2, 3) mit einem der verschiedenen Anbieter (7.1, 7.2, 7.n).

4. System nach einem der Ansprüche 1 bis 3, **dadurch gekennzeichnet, daß** eines der Portale (8.1 bis 8.3) ein WAP(Wireless Application Protocol)-Portal (8.2), das einerseits zwischen dem Internet (4) und einem Telefonnetz (5) und andererseits mehreren Informationen in unterschiedlicher Form übertragenden Anbietern (7.2, 7.3) angeordnet ist zur Verbindung eines an das Internet (4) oder das Telefonnetz (5) angeschlossenen Endgeräts (1, 2, 3) mit einem der verschiedenen Anbieter (7.2, 7.3).

5. System nach einem der Ansprüche 1 bis 4, **dadurch gekennzeichnet, daß** bei einem Endgerät (1, 2, 3) mit multimedialem Zugang die über mehrere Portale (8.1 bis 8.3) übertragenen Informationen eines Anbieters (7.1 bis 7.n) miteinander synchronisierbar sind.

6. System nach Anspruch 4 oder 5, **dadurch gekennzeichnet, daß** das Internet (4) und das Telefonnetz (5) über ein oder mehrere Gateways (6) miteinander gekoppelt sind und eine Verbindung zwischen einem Endgerät (1, 2, 3) und einem oder mehreren Anbietern (7.1 bis 7.n) über das Gateway (6) herstellbar ist.

7. System nach einem der Ansprüche 1 bis 6, **dadurch gekennzeichnet, daß** die von den verschiedenen Anbietern (7.1 bis 7.n) übertragenen Informationen in unterschiedlichen Skriptsprachen wie HTML, WML, VoiceML und xML dargestellt sind.

8. System nach einem der Ansprüche 1 bis 7, **dadurch gekennzeichnet, daß** die Portale (8.1 bis 8.3) und die jeweils angeschlossenen Anbieter (7.1 bis 7.n) in einer verteilten Architektur angeordnet sind.

9. System nach einem der Ansprüche 1 bis 7, **dadurch gekennzeichnet, daß** die Portale (8.1 bis 8.3) und die jeweils angeschlossenen Anbieter (7.1 bis 7.n) in einem einzigen Server realisiert sind.
